# EUROPÄISCHE PATENTANMELDUNG

(11) **EP 0 562 321 A1**
(43) Veröffentlichungstag der Anmeldung: **29.09.1993**
(21) Anmeldenummer: 93103435.9
(22) Anmeldetag: 04.03.1993
(51) Int. Cl.: B01D 17/02, C10M 175/00, B01D 61/14

(54) **Ölabscheider mit integrierter Mikrofiltrations-Einrichtung**

(30) Priorität: 25.03.1992 DE 4209588
(71) Anmelder: GÜTLING GMBH, D-70704 Fellbach (DE)
(72) Erfinder: Schwering, Hans Ulrich, Dr. Dipl.-Chem., W-7250 Leonberg (DE); Prinz, Uwe, Dipl.-Ing., W-7012 Fellbach-Schmiden (DE)
(74) Vertreter: KOHLER SCHMID + PARTNER

(57) **Zusammenfassung**

Eine Ölabscheidevorrichtung (1) aus Edelstahl zum Abtrennen von Öl bzw. Fett aus einem Flüssigkeitsgemisch besteht aus einem Tank (2), in welchem durch eine Tauchwand (3) eine Vorabscheidekammer (4) abgesondert ist, in der aufschwimmendes Öl bzw. Fett sowie absinkende Feststoffpartikel aus dem zulaufenden Flüssigkeitsgemisch aufgrund ihres spezifischen Gewichtes abgetrennt werden und mit Hilfe einer Schikane (12), die unterhalb der Tauchwand (3) vorgesehen ist, an einem Transport in das von der Vorabscheidekammer (4) abgesonderte Abteil (5) des Tankes (2) gehindert werden. Das abgesonderte Abteil (5) ist als Mikrofiltrationsstufe ausgebildet, in welcher eine Tauch-Umwälzpumpe (16) vorgesehen ist, die Flüssigkeit aus dem abgesonderten Abteil (5) ansaugt und durch einen in den Tank (2) ragendes Querstrom-Filtrationsgerät (19) mit Keramik-Rohrmembranen preßt, aus welchem gereinigtes Permeat abgeleitet und mit Öl bzw. Fett angereichertes Retentat, das die Poren der Keramik-Rohrmembranen nicht passiert hat, in das abgesonderte Abteil (5) zurückgeleitet wird. Die Ölabscheidevorrichtung (1) mit integrierter Mikrofiltration ist besonders hitzebeständig, kompakt und wartungsfreundlich und eignet sich wegen ihres geringen Platzbedarfes als mobile, auch dezentral einsetzbare Anlage zur Standzeitverlängerung von Entfettungsbädern etc.

## Beschreibung

Die Erfindung betrifft eine Ölabscheidevorrichtung aus einem korrosions- und temperaturbeständigen Material zum Abtrennen von Öl bzw. Fett aus einem Flüssigkeitsgemisch mit einer Vorabscheidekammer, in die ein Zulauf für das zu trennende ölhaltige Flüssigkeitsgemisch mündet und in der aufschwimmendes Öl bzw. Fett aus dem zulaufenden Flüssigkeitsgemisch abgetrennt werden, einer Mikrofiltrationsstufe, in der aus dem Flüssigkeitsgemisch emulgierte Öl- bzw. Fett-Tröpfchen mit Hilfe einer Filtermembran mit geeigneter Porengröße abgetrennt werden, und einem Permeat-Ablauf, in dem das von Öl bzw. Fett gereinigte Flüssigkeitsgemisch aus der Ölabscheidevorrichtung abgeführt wird.

Eine solche Vorrichtung ist beispielsweise bekannt aus dem Prospekt "Ultrafiltration Microfiltration" der Firma Gütling vom November 1991.

Die bekannte Vorrichtung dient zur Abtrennung von Ölen, Fetten und Feststoffen aus Emulsionen, insbesondere Öl-Wasser-Gemischen. Deartige ölhaltige Flüssigkeitsgemische werden in der metallverarbeitenden Industrie in großem Umfang als Kühlschmiermittel verwendet. Nach der mechanischen Bearbeitung müssen die hergestellten Teile gereinigt werden. Hierzu wurden früher Reinigungsanlagen verwendet, die mit chlorierten Lösemittel (CKW) als Reinigungsmedium arbeiteten. Aufgrund der vielen Umweltschäden werden diese CKW zunehmend durch wässrig-alkalische Reiniger ersetzt. Diese haben jedoch nur eine beschränkte Aufnahmekapazität für Öl und müssen dann verworfen und entsorgt werden. Pumpt man eine solche Reinigerlösung jedoch kontinuierlich mit relativ großer Geschwindigkeit und einem bestimmten Druck an einer porösen Membran vorbei, so läßt sich bei einer geeigneten Porenweite der Membran das Öl zurückhalten, während die Reinigerlösung in den Prozess zurückgeführt werden kann. Bei der Ultrafiltration werden Porenweiten von 0,03 bis 0,05 µm verwendet, wodurch auch viele Tenside zurück gehalten werden. Für Entsorgungszwecke ist diese Erscheinung erwünscht, für Recyclingszwecke ist sie hingegen störend. Wählt man dagegen eine relativ offenporige Microfiltrationsmembrane mit einer Porenweite zwischen 0,1 bis 2 µm, so beobachtet man zwar einen merklichen Ölschlupf, aber auch eine vollständige Tensidpassage, was für das Recycling günstig ist. Auf diese Weise läßt sich durch die Anwendung der Microfiltration in Verbindung mit dem Nachschärfen von Badinhaltsstoffen eine in der Theorie "unendliche" Standzeit des Entfettungsbades erreichen. In der Praxis erreicht man Standzeitverlängerungen um den Faktor fünf bis zehn, was einen merklichen Beitrag zur umweltfreundlichen Teilereinigung darstellt.

Um die Mikrofiltrationsstufe zu entlasten, wird bei der bekannten Ölabscheidevorrichtung der Mikrofiltrationsstufe eine Vorabscheidestufe vorgeschaltet, in der das zulaufende Flüssigkeitsgemisch eine relativ lange Zeit (circa 1 bis 2 Stunden) verweilt, so daß das nicht emulgierte Öl aufschwimmen und abgeschöpft werden kann. Dadurch muß in der Mikrofiltrationsstufe nur noch das emulgierte Öl aus dem Flüssigkeitsgemisch abgetrennt werden.

Da die aufzubereitenden Flüssigkeitsgemische in der Regel stark alkalisch sind, werden herkömmliche Ölabscheidevorrichtungen üblicherweise aus Kunststoff oder aus Normalstahl gebaut. Die Bauweise aus Kunststoff hat allerdings den Nachteil, daß heiße Flüssigkeitsgemische mit Temperaturen über 60 °C, wie sie in der Industrie häufig anfallen, vor dem Einleiten in die Ölabscheidevorrichtung gekühlt werden müssen. Die Bauweise aus Normalstahl hat den Nachteil, daß an der Phasengrenzfläche Flüssigkeit/Luft starke Korrosionen auftreten und daß Lackierungen gegen die eingesetzten Medien nicht beständig sind. Ein weiterer Nachteil der bekannten Vorrichtungen liegt in dem relativ großen Platzbedarf für die Vorabscheidestufe und die nachfolgende Mikrofiltrationsstufe. Die herkömmlichen Ölabscheidevorrichtungen sind daher vor allem für eine zentrale Flüssigkeitsaufbereitung mit großem Flüssigkeitsdurchsatz geeignet, jedoch vom Raumbedarf für die Standzeitverlängerung von kleineren Flüssigkeitsaufkommen zu groß, zu aufwendig und in der Regel zu teuer.

Hinzu kommt ein relativ großer Wartungsaufwand für die regelmäßige Reinigung und den Austausch der üblicherweise verwendeten Kunststoffmembranen in der Mikrofiltrationsstufe, die typischerweise alle hundert Betriebsstunden von dem an ihrer Oberfläche haftenden Öl befreit werden müssen.

Weiterer Wartungsaufwand ist bei den bekannten Ölabscheidevorrichtungen für den relativ häufigen Austausch von Gleitringdichtungen für die normalerweise zum Transport der zu reinigenden Flüssigkeit und zur Druckerzeugung beim Einleiten des Flüssigkeitsgemisches in die Mikrofiltrationsstufe verwendeten, außenliegenden Umwälzpumpen notwendig. Die in den meisten Fällen den Reinigunsbädern beigefügte Lauge kristallisiert nämlich häufig auf den Dichtungen aus und erzeugt beim Betrieb der Pumpe Riefen in den Dichtringen, so daß die Pumpe undicht wird und leckt. Andererseits bringt der scheinbar naheliegende Einsatz von magnetgekuppelten Pumpen anstelle der gleitringgedichteten Pumpen keine Lösung des Problems, da die in den zu reinigenden Flüssigkeiten typischerweise vorhandenen magnetisierbaren Späne den Spalttopf der Pumpen zerstören können.

Aufgabe der vorliegenden Erfindung ist es daher, eine Ölabscheidevorrichtung der eingangs genannten Art vorzustellen, die hitzebeständig, kompakt, dauerhaft und wartungsfreundlich ist und sich als mobile, variabel einsetzbare Anlage zur Standzeitverlängerung von Wasch- oder Entfettungsbädern auch bei kleinerem Flüssigkeitsaufkommen oder bei dezentralem Einsatz, beispielsweise an industriellen Fertigungsstraßen eignet.

Diese Aufgabe wird erfindungsgemäß dadurch gelöst, daß die Ölabscheidevorrichtung aus Edelstahl aufgebaut ist und einen Tank aufweist, in welchem durch eine von oben in den Tank ragende, vom Tankboden durch einen Spalt beabstandete Tauchwand die Vorabscheidekammer abgesondert ist, in der außer dem aufschwimmenden Öl bzw. Fett auch absinkende Feststoffpartikel aus dem zulaufenden Flüssigkeitsgemisch aufgrund ihres spezifischen Gewichtes abgetrennt werden, wobei am Tankboden unterhalb der Tauchwand und/oder mit Abstand von der Tauchwand in dem von der Vorabscheidekammer durch die Tauchwand abgesonderten Abteil des Tanks eine Schikane vorgesehen ist, die einen Transport der abgesunkenen Feststoffpartikel in das abgesonderte Abteil größtenteils verhindert, und wobei das abgesonderte Abteil als Mikrofiltrationsstufe ausgebildet ist, in welcher eine Tauch-Umwälzpumpe vorgesehen ist, die Flüssigkeit aus dem abgesonderten Abteil ansaugt und durch ein in den Tank ragendes Querstrom-Filtrationsgerät mit Keramik-Rohrmembranen preßt, aus dem einerseits gereinigtes Permeat in den Permeat-Ablauf abgeleitet wird, andererseits mit Öl bzw. Fett angereichertes Retentat, das die Poren der Keramik-Rohrmembranen nicht passiert hat, in das abgesonderte Abteil zurückgeleitet wird.

Die erfindungsgemäße Vorrichtung ist durch ihre integrierte Bauweise besonders platzsparend, so daß sie auch in kleineren Fertigungsbetrieben zu der gesetzlich geforderten Standzeitverlängerung von Entfettungs- oder Waschbädern eingesetzt werden kann. Aus der kompakten Bauweise, die lediglich einen einzigen Tank aufweist, folgt auch ein geringerer Materialaufwand bei der Herstellung der erfindungsgemäßen Vorrichtung. Durch die Verwendung von Edelstahl eignet sich die erfindungsgemäße Ölabscheidevorrichtung auch für die Entfettung von relativ heißen Flüssigkeitsgemischen, wobei keine zusätzlichen, aufwendigen Kühleinrichtungen erforderlich sind, die einerseits zusätzlichen Platz benötigen würden und andererseits durch die Anschaffungs- und Betriebskosten die gesamte Anlage wesentlich unwirtschaftlicher gestalten würden. Der Einsatz einer wartungsfreundlichen dichtungslosen Tauchpumpe macht ein häufiges Auswechseln von durch auskristallisierende Lauge schnell verschlissenen Gleitringdichtungen überflüssig. Außerdem wird durch die Verwendung von Keramik-Rohrmembranen bei der im erfindungsgemäßen Ölabscheider integrierten Mikrofiltrationsstufe der Wartungsaufwand gegenüber den herkömmlichen Kunststoffmembranen auf ein Minimum reduziert, wie unten näher erläutert wird. Durch die Verwendung einer Schikane, die einen Transport der abgesunkenen Feststoffpartikel aus der Vorabscheidekammer in das abgesonderte Abteil mit der Mikrofiltrationsstufe verhindert, werden größere Teilchen von der Tauch-Umwälzpumpe und dem Querstrom-Filtrationsgerät ferngehalten, die sonst möglicherweise zu Betriebsstörungen des Systems, zumindest jedoch zu einem häufigeren Reinigen der Mikrofiltrationsstufe und der Pumpe Anlaß gegeben hätten. Dadurch wird der Wartungsaufwand für die erfindungsgemäße Ölabscheidevorrichtung noch weiter verringert und die störungsfreie Betriebszeit entsprechend verlängert.

Bei einer anderen Ausführungsform weist die Schikane eine Rampe auf, die vom Boden der Vorabscheidekammer durch den freien Spalt unterhalb der Tauchwand zum abgesonderten Abteil hin stetig ansteigt. Dadurch rollen oder rutschen die abgesunkenen schweren Partikel, die sich durch den Spalt in das abgesonderte Abteil mit der Mikrofiltrationsstufe bewegt haben, in die Vorabscheidekammer zurück.

Bei einer weiteren Ausführungsform kann die Schikane in dem abgesonderten Abteil eine vom Tankboden nach oben ragende Wand aufweisen, die sich mindestens bis in die Höhe des unteren Randes der Tauchwand, vorzugsweise aber darüberhinaus erstreckt. Auf diese Weise wird der Spalt zwischen den beiden Abteilen des Tankes optisch dicht und feste, schwere Partikel können nur noch im Extremfall durch sehr starke Strömungen von der Vorabscheidekammer in das abgesonderte Abteil übertreten.

Um die Wartungsfreiheit zu erhöhen und den störungsfreien Betrieb der erfindungsgemäßen Ölabscheidevorrichtung über längere Zeit zu gewährleisten, ist bei einer bevorzugten Ausführungsform ein Motorschaltgerät mit integriertem Trockenlaufschutz zum Schalten der Tauch-Umwälzpumpe vorgesehen. Eine zusätzliche Überwachung des Systems bei geringem Flüssigkeitsanfall durch eine Bedienungsperson fällt damit ebenfalls weg.

Im einfachsten Fall kann als Trockenlaufschutz für die Tauch-Umwälzpumpe ein in den Tank ragender Magnetschwimmschalter vorgesehen sein, der als simples mechanisches Teil wartungsfrei, störungsunempfindlich und äußerst zuverlässig ist.

Eine weitere Überwachungsfunktion wird bei einer bevorzugten Ausführungsform dadurch überflüssig, daß im Zulauf für das zu trennende Flüssigkeitsgemisch ein Zulaufventil vorgesehen ist, das von einem Schwimmer direkt mechanisch betätigt wird.

Bei einer anderen Ausführungsform kann die Meßeinrichtung aus einem in den Tank ragenden Magnetschwimmschalter bestehen, mit dem sowohl die Tauch-Umwälzpumpe als auch das Zulaufventil angesteuert werden kann, so daß für den Trockenlaufschutz und die Überfüllsicherung lediglich ein Meßfühler mit zwei Schaltpunkten erforderlich ist, was die erfindungsgemäße Vorrichtung noch kompakter und billiger gestaltet.

Bei einer besonders bevorzugten Ausführungsform ist eine Rückpulsvorrichtung vorgesehen, mit der ein Druckluftstoß im Permeat-Ablauf in entgegengesetzte Strömungsrichtung des ablaufenden Permeats in Richtung auf die Keramik-Rohrmembranen erzeugt werden kann. Durch ein regelmäßiges Erzeugen des Druckluftstoßes entgegen der Strömungsrichtung des ablaufenden Permeats wird das mit Öl und eventuell kleinen Schmutzpartikeln angereicherte Keramikfilter immer wieder gesäubert, ohne daß hierzu eine wesentliche Unterbrechung des Betriebs der Ölabscheidevorrichtung oder ein Austauschen des Filters notwendig wäre. Im Gegensatz zu den herkömmlicherweise verwendeten Kunststoffmembranen, die durch einen derartigen Druckluftstoß zerstört werden würden, erlaubt die mechanische Stabilität der Keramik-Rohrmembranen bei der erfindungsgemäßen Ölabscheidevorrichtung ein Ablösen des auf der Membranfläche haftenden Ölfilmes durch einen regelmäßigen Druckluftimpuls entgegen der Filtrationsrichtung. Damit wird eine vollautomatische Rückspülung möglich, wobei die Filtrationsleistung der Anlage über einen langen Zeitraum konstant bleibt. Erfahrungsgemäß muß bei der erfindungsgemäßen Vorrichtung nur alle 500 bis 1 000 Betriebsstunden eine kurze, etwa einstündige Reinigungsspülung des Filters durchgeführt werden. Die Betriebskosten bei der erfindungsgemäßen Ölabscheidevorrichtung beschränken sich daher auf die Stromkosten für die Pumpe sowie eine gelegentliche Reinigungsspülung. Es fallen weder Kosten für Filterersatz, noch für Gleitringdichtungen an, und auch sonstige zusätzliche Entsorgungskosten für verölte Filterelemente entfallen.

Die Rückpulsvorrichtung ist vorzugsweise über ein 3/2-Wege-Ventil an den Permeat-Ablauf angeschlossen. Durch das Vorsehen eines "intelligenten" Ventilschalters mit programmierbarer Zeitsteuerung zur Ansteuerung des 3/2-Wege-Ventils kann auch die Rückpuls- und Reinigungsfunktion automatisiert werden.

Bei einer bevorzugten Ausführungsform ist zwischen dem Querstrom-Filtrationsgerät und dem 3/2-Wege-Ventil im Permeat-Ablauf eine Flüssigkeitspeicherkammer vorgesehen, die auch aus einer einfachen Querschnittserweiterung der Permeat-Ablauf-Leitung bestehen kann. Bei einem Druckluftstoß entgegen der Permeat-Stromrichtung wandert die Luftsäule in der Permeat-Leitung nicht bis zu den Keramik-Rohrmembranen, sondern der Druck des Druckluftstoßes wird auf die in der Flüssigkeitsspeicherkammer stehende Flüssigkeitssäule übertragen. Die direkte Druckbeaufschlagung der Keramik-Rohrmembranen erfolgt damit hydraulisch. Auf diese Weise wird ein Eindringen von Luft in den Keramikkörper während des Rückpulsstoßes verhindert.

Dem gleichen Zweck dient bei einer weiteren Ausführungsform eine elektrische Verschaltung des Ventilschalters mit der Antriebseinrichtung der Tauch-Umwälzpumpe derart, daß das 3/2-Wege-Ventil für einen Druckluftstoß nur dann geöffnet werden kann, wenn gleichzeitig die Tauch-Umwälzpumpe in Betrieb ist. Dadurch wird ein unbeabsichtigtes Eindringen von Luft in die Keramik-Rohrmembranen bei stehender Förderpumpe ebenfalls verhindert, was einen Funktionsausfall des Filters zur Folge hätte, da die Membranoberflächen durch die eingedrungenen und angelagerten Luftbläschen passiviert werden würden.

Bei einer weiteren vorteilhaften Ausführungsform ist hinter dem 3/2-Wege-Ventil auf der Seite der Druckluftzufuhr ein Rückschlagventil vorgesehen, um das Druckluftnetz gegen einen Flüssigkeitszutritt abzusichern.

Bei einer bevorzugten Ausführungsform ist im Permeat-Ablauf in Strömungsrichtung des ablaufenden Permeats gesehen hinter dem 3/2-Wege-Ventil ein Durchflußmeßgerät vorgesehen. Um die Durchflußanzeige nicht zu sehr durch Gasblasen zu stören, ist zwischen dem 3/2-Wege-Ventil und dem Durchflußmeßgerät eine Rohrleitung vorgesehen, die zunächst einen in Bezug auf das 3/2-Wege-Ventil nach unten verlaufenden Abschnitt aufweist, dessen Leitungsdurchmesser größer ist als der Leitungsdurchmesser der übrigen Abschnitte des Permeat-Ablaufs, und hinter dem nach unten verlaufenden Abschnitt ein nach oben verlaufender Abschnitt, der das Durchflußmeßgerät enthält.

Während des Rückpulsens wird die Permeat-Leitung und der Permeat-Raum der Mikrofiltrationsstufe unter erhöhten Druck gesetzt, wobei die Rohrleitung zum Teil mit gespannter Luft gefüllt ist. Beim Umschalten des 3/2-Wege-Ventils auf Permeat-Abnahme erfolgt daher eine schlagartige Entspannung, wodurch Pulsationen oder Vibrationen des Rohrleitungsnetzes hervorgerufen werden, sofern nicht besondere Maßnahmen ergriffen werden. Daher ist bei einer bevorzugten Ausführungsform vom Permeat-Ablauf in Strömungsrichtung des ablaufenden Permeats gesehen unmittelbar hinter dem 3/2-Wege-Ventil eine Entlüftungsleitung zur Abführung der durch einen Druckstoß in den Permeat-Ablauf gelangten Luft abgezweigt, wobei die Entlüftungsleitung einen in Bezug auf das 3/2-Wege-Ventil nach oben verlaufenden Abschnitt aufweist. Durch diese besondere Anordnung der Entlüftungsleitung werden Schläge auf die Rohrleitung stark vermindert, die Leitung wirkt wie eine Abblaseleitung.

Bei einer vorteilhaften Weiterbildung weist der nach oben verlaufende Abschnitt der Entlüftungsleitung eine Entspannungskammer zur Dekompression der abgeleiteten Luft sowie zur Trennung der in die Permeat-Leitung eingebrachten Luft von mitgerissener Flüssigkeit auf. Um die restliche von der Luft durch die Entlüftungsleitung mitgeführte Flüssigkeit zu entsorgen, kann die Entlüftungsleitung von oben her in den Tank geführt sein.

Eine besonders effektive Trennung von Luft und Flüssigkeit wird dadurch erreicht, daß sämtliche Abschnitte des Permeat-Ablaufs tiefer liegen als der Abzweigungspunkt der Entlüftungsleitung vom Permeat-Ablauf, insbesondere, daß der höchste Punkt der Entlüftungsleitung mindestens 0,2 m, vorzugsweise 0,3 m über dem höchsten Punkt des Permeat-Ablaufs angeordnet ist.

Bei einer bevorzugten Ausführungsform der erfindungsgemäßen Ölabscheidevorrichtung weisen die Keramik-Rohrmembranen des Querstrom-Filtrationsgerätes eine Porenweite von 0,1 bis 2 µm, vorzugsweise etwa 0,8 µm auf. Damit wird bei noch guter Ölrückhaltefähigkeit bereits eine gute Tensidpassage durch die Filtermembran erreicht.
Den Rahmen der Erfindung verläßt auch nicht ein Verfahren zum Betrieb einer Ölabscheidevorrichtung mit den oben genannten Merkmalen, bei dem während des Betriebes der Mikrofiltrationsstufe, insbesondere bei laufender Tauch-Umwälzpumpe eine Reinigung der inneren Oberflächen der Keramik-Rohrmembranen durch periodisches Pulsen von Druckluft durch den Permeat-Ablauf in das Querstrom-Filtrationsgerät durchgeführt wird. Durch die kurzen periodischen Druckluftpulse wird die Durchlaufleistung der erfindungsgemäßen Ölabscheidevorrichtung nicht wesentlich verringert, wobei aber eine vollständige Stillegung der Vorrichtung zum Zwecke der immer wieder notwendig werdenden Reinigung des Mikrofiltrationssystems vermieden wird.

Versuche haben gezeigt, daß die erfindungsgemäße Ölabscheidevorrichtung am effektivsten mit Druckluftstößen mit einem Druck von 2 bis 10 bar, vorzugsweise 4 bis 6 bar betrieben wird. Außerdem haben sich Zeitperioden von einer halben bis 1 1/2 Minuten zwischen den einzelnen Druckluftstößen und Pulsdauern von 0,1 bis 2 Sekunden als besonders effektiv erwiesen.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebiger Kombination Anwendung finden. Es zeigen:
- Fig. 1: ein schematisches Funktionsschema der erfindungsgemaßen Ölabscheidevorrichtung und
- Fig. 2: ein schematisches Funktionsschema der Rückpulsvorrichtung im Zusammenwirken mit dem Permeat-Ablauf und der Entlüftungsleitung.

Die erfindungsgemäße Ölabscheidevorrichtung 1 ist im Gegensatz zu den üblichen aus Kunststoff oder Normalstahl aufgebauten Vorrichtungen nach dem Stand der Technik aus Edelstahl aufgebaut und damit sowohl korrosionsbeständig als auch hitzefest. Die Anlage dient zur Abtrennung von Ölen, Fetten und Feststoffen aus Emulsionen. Sie ist besonders kompakt und daher als modulares Ölabtrenngerät zum Zwecke der gesetzlich geforderten Standzeitverlängerung für Wasch- und Entfettungsbäder sowohl an großen industriellen Fertigungsstraßen als auch in Betrieben mit kleinerem Flüssigkeitsaufkommen variabel einsetzbar.

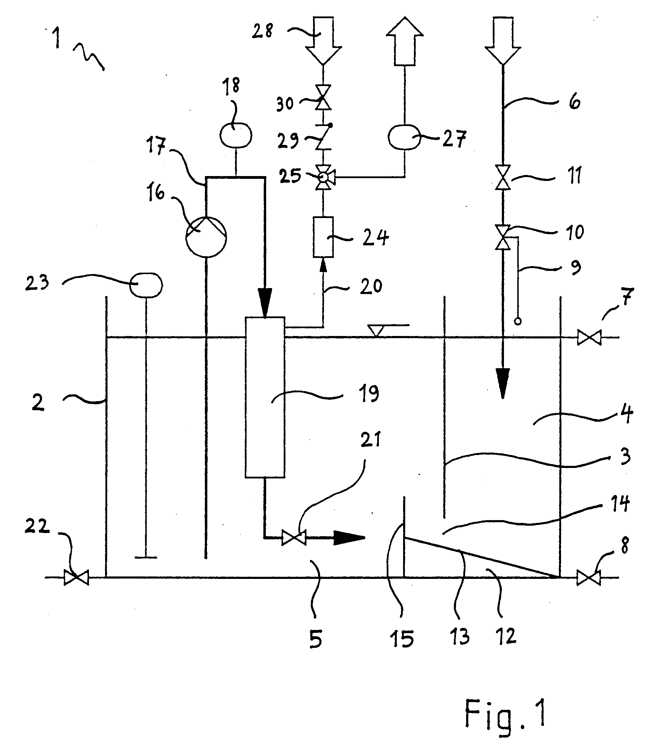

Die Ölabscheidevorrichtung 1 weist, wie in Fig. 1 gezeigt, einen Tank 2 aus Edelstahl auf, der durch eine Tauchwand 3 in eine Vorabscheidekammer 4 und in ein abgesondertes Abteil 5 aufgeteilt ist. In die Vorabscheidekammer 4 mündet ein Zulauf 6 für das zu trennende ölhaltige Flüssigkeitsgemisch, das in der Vorabscheidekammer 4 keinen Turbulenzen ausgesetzt ist, so daß aufgrund des spezifischen Gewichts die leichteren Öle und Fette aufschwimmen, während schwere Feststoffpartikel, z. B. Metallspäne zum Boden der Vorabscheidekammer 4 absinken. Über ein erstes Ablaßventil 7 kann die oben schwimmende Öl- bzw. Fettschicht aus der Vorabscheidekammer 4 entfernt werden, während über ein zweites Ablaßventil 8 in der Nähe des Bodens der Vorabscheidekammer 4 bei Bedarf die abgesetzten schweren Feststoffpartikel mit der im Tank befindlichen Flüssigkeit abgelassen werden können. Über eine Schwimmermimik 9 wird bei Überfüllung des Tankes 2 ein Zulaufventil 10 in der Zulaufleitung 6 geschlossen, so daß keine weitere Flüssigkeit in den Tank 2 nachläuft. Außerdem ist ein erstes Sperrventil 11 vorgesehen, mit dem die Leitung des Zulaufes 6 auch von Hand abgesperrt werden kann.

Am Boden der Vorabscheidekammer 4 ist eine Schikane 12 vorgesehen, die bei dem gezeigten Ausführungsbeispiel aus einer Rampe 13 besteht, die vom Boden der Vorabscheidekammer 4 durch den freien Spalt 14 unterhalb der Tauchwand 3 zum abgesonderten Abteil 5 hin stetig ansteigt, sowie aus einer vom Tankboden nach oben ragenden Wand 15, die sich über die Höhe des unteren Randes der Tauchwand 3 hinaus nach oben erstreckt. Dadurch werden die abgesetzten schweren Feststoffpartikel in der Vorabscheidekammer 4 gehalten und können nicht in das abgesonderte Abteil 5 eindringen, wo insbesondere Metallspäne Teile der im abgesonderten Anteil 5 vorgesehenen Mikrofiltrationsstufe beschädigen könnten.

Das unter dem Spalt 14 hindurch von der Vorabscheidekammer 4 in das abgesonderte Abteil 5 dringende Flüssigkeitsgemisch enthält Öle und Fette nur noch in emulgierter Form. Durch eine dichtungslose Tauch-Umwälzpumpe 16 wird das Flüssigkeitsgemisch aus dem abgesonderten Abteil 5 abgepumpt und durch eine Druckleitung 17 an der ein Druckmeßgerät 18 vorgesehen ist, in ein in den Tank 2 ragendes Querstrom-Filtrationsgerät 19 mit in der Zeichnung nicht dargestellten Keramik-Rohrmembranen hineingepreßt. Das gereinigte Permeat, welches die Filtermembranen passiert hat, wo es aufgrund der entsprechenden Porengröße der Membranen von den emulgierten Öl- bzw. Fett-Tröpfchen befreit wurde, wird über den Permeat-Ablauf 20 von der Ölabscheidevorrichtung 1 abgeführt.

Das mit Öl bzw. Fett angereicherte Retentat, das die Poren der Keramik-Rohrmembranen des Querstrom-Filtrationsgerätes 19 nicht passiert hat, wird in das abgesonderte Abteil 5 über eine Leitung mit einem zweiten Sperrventil 21, das dem Einstellen eines bestimmten Druckes dient, zurückgeführt.

Bei mehrmaligem Durchlaufen der Mikrofiltrationsstufe wird das Flüssigkeitsgemisch im abgesonderten Abteil 5 immer weiter mit Öl bzw. Fett angereichert. Sobald die Öl- bzw. Fettkonzentration des Flüssigkeitsgemisches einen Wert zwischen 40 und 60% erreicht hat, wird das Flüssigkeitsgemisch über ein drittes Ablaßventil 22 aus dem Tank 2 entfernt und beispielsweise durch Vakuumverdampfen des Restwassers weiter aufkonzentriert und entsorgt.

Zum Schutze der Tauch-Umwälzpumpe 16 ist ein Magnetschwimmschalter 23 vorgesehen, der bei Absinken des Flüssigkeitsstandes im abgesonderten Abteil 5 unter eine bestimmte minimale Marke die Tauch-Umwälzpumpe 16 abschaltet und vor einem Trockenlaufen bewahrt.

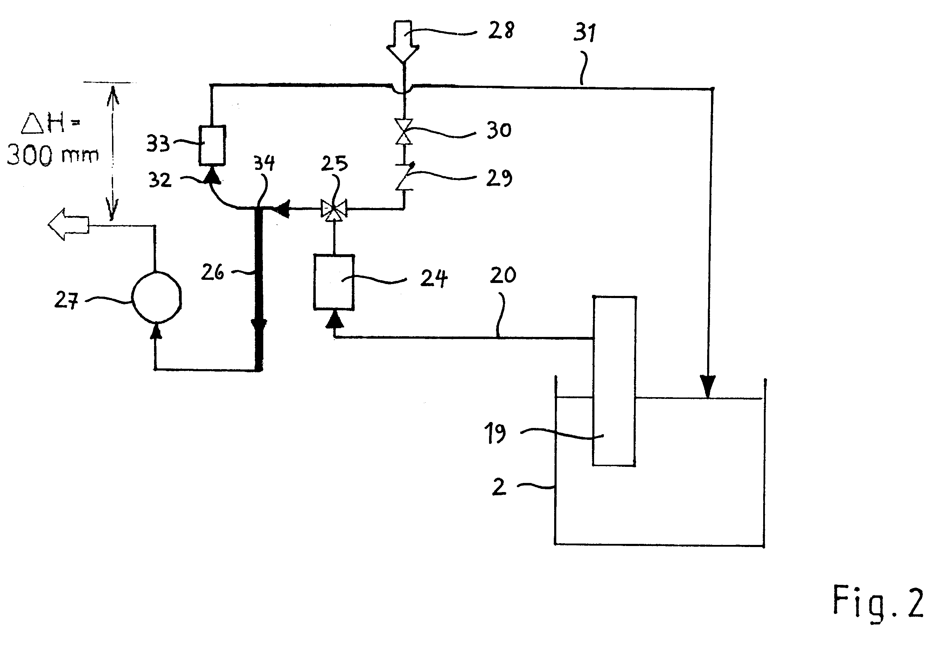

Wie in Fig. 2 näher gezeigt, wird das aus dem Querstrom-Filtrationsgerät 19 ablaufende Permeat in eine Flüssigkeitsspeicherkammer 24 geführt, die einen gegenüber der Permeat-Ablaufleitung wesentlich erhöhten Querschnitt aufweist, dessen Bedeutung weiter unten erklärt wird. Durch ein 3/2-Wege-Ventil gelangt das Permeat in einen nach unten verlaufenden Abschnitt 26 des Permeat-Ablaufes 20, dessen Leitungsquerschnitt gegenüber den übrigen Leitungsabschnitten des Permeat-Ablaufes 20 merklich erhöht ist. Anschließend tritt das Permeat durch ein Durchflußmeßgerät 27, das in einem nach oben verlaufenden Leitungsabschnitt des Permeat-Ablaufes 20 vorgesehen ist, und wird schließlich wieder dem ursprünglichen Entfettungs- oder Wasch-Bad zugeführt, dem das Flüssigkeitsgemisch aus dem Zulauf 6 entnommen wurde.

Auf der anderen Seite des 3/2-Wege-Ventiles 25 ist eine Druckluftzufuhr 28 vorgesehen, durch die bei in der entsprechenden Richtung geöffnetem 3/2-Wege-Ventil 25 ein Druckluftstoß durch die Flüssigkeitsspeicherkammer 24 in das Querstrom-Filtrationsgerät 19 in entgegengesetzter Strömungsrichtung des ablaufenden Permeats erzeugt werden kann. Durch diesen Druckluftstoß wird das Retentat-seitig an den Wänden der Keramik-Rohrmembranen angelagerte Öl bzw. Fett "herausgeklopft" und damit das Filter gereinigt und neu aktiviert. Damit jedoch keine Luft an die Membranoberflächen gelangt, wo feine Luftbläschen wiederum eine Verstopfung des Filters bewirken würden, wird der Druckluftstoß von der Flüssigkeit in der Flüssigkeitsspeicherkammer 24 abgefangen und hydraulisch an die Keramik-Rohrmembranen weitergegeben. Ein Rückschlagventil 29 sichert das Druckluftnetz gegen einen unbeabsichtigten Flüssigkeitszutritt ab. Manuell kann die Druckluftzufuhr 28 auch durch das dritte Sperrventil 30 vom Permeat-Ablauf 20 abgekoppelt werden.

In Strömungsrichtung des ablaufenden Permeats gesehen hinter dem 3/2-Wege-Ventil 25 ist vom Permeat-Ablauf 20 eine Entlüftungsleitung 31 zur Abführung der durch einen Druckluftstoß in den Permeat-Ablauf 20 gelangten Luft abgezweigt. Die Entlüftungsleitung 31 weist zunächst einen in Bezug auf das 3/2-Wege-Ventil 25 nach oben verlaufenden Abschnitt 32 mit einer Entspannungskammer 33 auf. In der Entspannungskammer 33 wird die aus dem Permeat-Ablauf 20 austretende Luft dekomprimiert und von mitgeführten Flüssigkeitsanteilen größtenteils getrennt. Während das von der Luft in der Entspannungskammer 33 abgetrennte Permeat über den Abschnitt 32 in den Abschnitt 26 des Permeat-Ablaufes 20 zurückgeführt wird, gelangt die Luft mit geringen Restflüssigkeitsanteilen über die Entlüftungsleitung 31 in den Tank 2, so daß auch die restliche Flüssigkeit in den Kreislauf zurückgeführt wird.

Die Entspannungskammer 33 sowie der erweiterte Leitungsquerschnitt des Abschnittes 26 dienen einer wesentlichen Verminderung der bei der Entspannung des Druckluftstoßes verursachten Pulsationen und Vibrationen des Rohrleitungsnetzes. Außerdem wird dadurch die kinetische Energie des unter Druck austretenden Gas-Flüssigkeitsgemisches entscheidend vermindert. Der vergrößerte Leitungsdurchmesser des Abschnittes 26 trägt weiterhin dazu bei, daß die Anzeige des Durchflußmeßgerätes 27 durch Gasblasen nicht allzu sehr gestört wird.

Zweckmäßigerweise liegen sämtliche Abschnitte des Permeat-Ablaufes 20 tiefer als der Abzweigungspunkt 34 der Entlüftungsleitung 31 vom Permeat-Ablauf 20. Insbesondere sollte der höchste Punkt der Entlüftungsleitung 31 mindestens 0,2 bis 0,3 m über dem höchsten Punkt des Permeat-Ablaufes 20 angeordnet sein, um eine ordnungsgemäße Funktion der Entlüftungsleitung 31 und des Permeat-Ablaufes 20 zu gewährleisten.

Zur Automatisierung der Reinigung des Querstrom-Filtrationsgerätes 19 durch Druckluftstöße ist ein "intelligenter" Ventilschalter mit programmierter Zeitsteuerung vorgesehen, der das 3/2-Wege-Ventil 25 ansteuert. Die Druckluftstöße erfolgen während des Betriebes der Mikrofiltrationsstufe, insbesondere bei laufender Tauch-Umwälzpumpe 16 in periodischen Abständen. Die Druckbeaufschlagung erfolgt alle 30 bis 90 Sekunden mit einer Pulsdauer von 0,1 bis 2 Sekunden, wobei Drücke von 2 bis 10 bar, vorzugsweise zwischen 4 und 6 bar angewendet werden. Die Intervallzeiten können während des Betriebes der erfindungsgemäßen Ölabscheidevorrichtung empirisch optimiert werden, so daß eine maximale Permeat-Menge erzielt werden kann.

## Patentansprüche

1. Ölabscheidevorrichtung aus einem korrosions- und temperaturbeständigen Material zum Abtrennen von Öl bzw. Fett aus einem Flüssigkeitsgemisch mit einer Vorabscheidekammer, in die ein Zulauf für das zu trennende ölhaltige Flüssigkeitsgemisch mündet und in der aufschwimmendes Öl bzw. Fett aus dem zulaufenden Flüssigkeitsgemisch abgetrennt werden, einer Mikrofiltrationsstufe, in der aus dem Flüssigkeitsgemisch emulgierte Öl- bzw. Fett-Tröpfchen mit Hilfe einer Filtermembran mit geeigneter Porengröße abgetrennt werden, und einem Permeat-Ablauf, in dem das von Öl bzw. Fett gereinigte Flüssigkeitsgemisch aus der Ölabscheidevorrichtung abgeführt wird,
dadurch gekennzeichnet,
daß die Ölabscheidevorrichtung (1) aus Edelstahl aufgebaut ist und einen Tank (2) aufweist, in welchem durch eine von oben in den Tank (2) ragende, vom Tankboden durch einen Spalt (14) beabstandete Tauchwand (3) die Vorabscheidekammer (4) abgesondert ist, in der außer dem aufschwimmenden Öl bzw. Fett auch absinkende Feststoffpartikel aus dem zulaufenden Flüssigkeitsgemisch aufgrund ihres spezifischen Gewichtes abgetrennt werden, wobei am Tankboden unterhalb der Tauchwand (3) und/oder mit Abstand von der Tauchwand (3) in dem von der Vorabscheidekammer (4) durch die Tauchwand (3) abgesonderten Abteil (5) des Tanks (2) eine Schikane (12) vorgesehen ist, die einen Transport der abgesunkenen Feststoffpartikel in das abgesonderte Abteil (5) größtenteils verhindert, und wobei das abgesonderte Abteil (5) als Mikrofiltrationsstufe ausgebildet ist, in welcher eine Tauch-Umwälzpumpe (16) vorgesehen ist, die Flüssigkeit aus dem abgesonderten Abteil (5) ansaugt und durch ein in den Tank (2) ragendes Querstrom-Filtrationsgerät (19) mit Keramik-Rohrmembranen preßt, aus dem einerseits gereinigtes Permeat in den Permeat-Ablauf (20) abgeleitet wird, andererseits mit Öl bzw. Fett angereichertes Retentat, das die Poren der Keramik-Rohrmembranen nicht passiert hat, in das abgesonderte Abteil (5) zurückgeleitet wird.

2. Ölabscheidevorrichtung nach Anspruch 1, dadurch gekennzeichnet, daß die Schikane (12) eine Rampe (13) aufweist, die vom Boden der Vorabscheidekammer (4) durch den freien Spalt (14) unterhalb der Tauchwand (3) zum abgesonderten Abteil (5) hin stetig ansteigt.

3. Ölabscheidevorrichtung nach Anspruch 1 oder 2, dadurch gekennzeichnet, daß die Schikane (12) in dem abgesonderten Abteil (5) eine vom Tankboden nach oben ragende Wand (15) aufweist, die sich mindestens bis in die Höhe des unteren Randes der Tauchwand (3), vorzugsweise darüber hinaus erstreckt.

4. Ölabscheidevorrichtung nach einem der vorhergehenden Ansprüche, dadurch gekennzeichnet, daß ein Motorschaltgerät mit integriertem Trockenlaufschutz zum Schalten der Tauch-Umwälzpumpe (16) vorgesehen ist.

5. Ölabscheidevorrichtung nach Anspruch 4, dadurch gekennzeichnet, daß ein in den Tank (2) ragender Magnetschwimmschalter (23) als Trockenlaufschutz für die Tauch-Umwälzpumpe (16) vorgesehen ist.

6. Ölabscheidevorrichtung nach einem der vorhergehenden Ansprüche, dadurch gekennzeichnet, daß im Zulauf (6) für das zu trennende Flüssigkeitsgemisch ein Zulaufventil (10) vorgesehen ist, das von einer Meßeinrichtung zur Messung des Flüssigkeitsstandes im Tank (2) ansteuerbar ist.

7. Ölabscheidevorrichtung nach Anspruch 6, dadurch gekennzeichnet, daß Meßeinrichtung eine in den Tank (2) ragende Schwimmermimik (9) ist, mit der das Zulaufventil (10) direkt mechanisch betätigt werden kann.

8. Ölabscheidevorrichtung nach Anspruch 5 und 6, dadurch gekennzeichnet, daß ein Magnetschwimmschalter (23) vorgesehen ist, mit dem sowohl die Tauch-Umwälzpumpe (16) als auch das Zulaufventil (10) angesteuert werden kann.

9. Ölabscheidevorrichtung nach einem der vorhergehenden Ansprüche, dadurch gekennzeichnet, daß eine Rückpulsvorrichtung vorgesehen ist, mit der ein Druckluftstoß im Permeat-Ablauf (20) in entgegengesetzter Strömungsrichtung des ablaufenden Permeats in Richtung auf die Keramik-Rohrmembranen erzeugt werden kann.

10. Ölabscheidevorrichtung nach Anspruch 9, dadurch gekennzeichnet, daß die Rückpulsvorrichtung über ein 3/2-Wege-Ventil (25) an den Permeat-Ablauf (20) angeschlossen ist.

11. Ölabscheidevorrichtung nach Anspruch 10, dadurch gekennzeichnet, daß ein "intelligenter" Ventilschalter mit programmierbarer Zeitsteuerung zur Ansteuerung des 3/2-Wege-Ventils (25) vorgesehen ist.

12. Ölabscheidevorrichtung nach Anspruch 10 oder 11, dadurch gekennzeichnet, daß zwischen dem Querstrom-Filtrationsgerät (19) und dem 3/2-Wege-Ventil (25) im Permeat-Ablauf (20) eine Flüssigkeitsspeicherkammer (24) vorgesehen ist.

13. Ölabscheidevorrichtung nach Anspruch 11 oder 12, dadurch gekennzeichnet, daß der Ventilschalter mit der Antriebseinrichtung der Tauch-Umwälzpumpe (16) derart gekoppelt ist, daß das 3/2-Wege-Ventil (25) für einen Druckluftstoß nur dann geöffnet werden kann, wenn gleichzeitig die Tauch-Umwälzpumpe (16) in Betrieb ist.

14. Ölabscheidevorrichtung nach einem der Ansprüche 10 bis 13, dadurch gekennzeichnet, daß hinter dem 3/2-Wege-Ventil (25) auf der Seite der Druckluftzufuhr ein Rückschlagventil (29) vorgesehen ist.

15. Ölabscheidevorrichtung nach einem der Ansprüche 10 bis 14, dadurch gekennzeichnet, daß im Permeat-Ablauf (20) in Strömungsrichtung des ablaufenden Permeats gesehen hinter dem 3/2-Wege-Ventil (25) eine Rohrleitung vorgesehen ist, die zunächst einen in Bezug auf das 3/2-Wege-Ventil (25) nach unten verlaufenden Abschnitt (26) aufweist, dessen Leitungsdurchmesser größer ist als der Leitungsdurchmesser der übrigen Abschnitte des Permeat-Ablaufs (20), und daß hinter dem nach unten verlaufenden Abschnitt (26) ein nach oben verlaufender Abschnitt vorgesehen ist, der ein Durchflußmeßgerät (27) enthält.

16. Ölabscheidevorrichtung nach einem der Ansprüche 10 bis 15, dadurch gekennzeichnet, daß vom Permeat-Ablauf (20) in Strömungsrichtung des ablaufenden Permeats gesehen unmittelbar hinter dem 3/2-Wege-Ventil (25) eine Entlüftungsleitung (31) zur Abführung der durch einen Druckluftstoß in den Permeat-Ablauf (20) gelangten Luft abgezweigt ist, die einen in Bezug auf das 3/2-Wege-Ventil (25) nach oben verlaufenden Abschnitt (32) aufweist.

17. Ölabscheidevorrichtung nach Anspruch 16, dadurch gekennzeichnet, daß der nach oben verlaufendene Abschnitt (32) der Entlüftungsleitung (31) eine Entspannungskammer (33) zur Dekompression der abgeleiteten Luft aufweist.

18. Ölabscheidevorrichtung nach Anspruch 16 oder 17, dadurch gekennzeichnet, daß die Entlüftungsleitung (31) von oben her in den Tank (2) geführt ist.

19. Ölabscheidevorrichtung nach einem der Ansprüche 16 bis 18, dadurch gekennzeichnet, daß sämtliche Abschnitte des Permeat-Ablaufs (20) tiefer liegen als der Abzweigungspunkt (34) der Entlüftungsleitung (31) vom Permeat-Ablauf (20), insbesondere, daß der höchste Punkt der Entlüftungsleitung (31) mindestens 0,2 m, vorzugsweise 0,3 m über dem höchsten Punkt des Permeat-Ablaufs (20) angeordnet ist.

20. Ölabscheidevorrichtung nach einem der vorhergehenden Ansprüche, dadurch gekennzeichnet, daß die Keramik-Rohrmembran des Querstrom-Filtrationsgerätes (19) eine Porenweite von 0,1 bis 2 µm, vorzugsweise 0,8 µm aufweisen.

21. Verfahren zum Betrieb einer Ölabscheidevorrichtung nach einem der Ansprüche 9 bis 19, dadurch gekennzeichnet, daß während des Betriebes der Mikrofiltrationsstufe, insbesondere bei laufender Tauch-Umwälzpumpe (16) eine Reinigung der inneren Oberflächen der Keramik-Rohrmembranen durch periodisches Pulsen von Druckluft durch den Permeat-Ablauf (20) in Richtung auf das Querstrom-Filtrationsgerät (19) durchgeführt wird.

22. Verfahren nach Anspruch 20, dadurch gekennzeichnet, daß Druckluft mit einem Druck von 2 bis 10 bar, vorzugsweise von 4 bis 6 bar verwendet wird.

23. Verfahren nach einem der Ansprüche 20 oder 21, dadurch gekennzeichnet, daß die Druckluftbeaufschlagung alle 30 bis 90 sec mit einer Pulsdauer von 0,1 bis 2 sec erfolgt.
